# EUROPEAN PATENT SPECIFICATION

(11) **EP 1 279 033 B1**
(45) Date of publication and mention of the grant of the patent: **06.10.2004**
(21) Application number: 01959935.6
(22) Date of filing: 27.01.2001
(51) Int. Cl.: G01N 27/26, G01N 33/48, G01N 27/416, G01N 33/543

(54) **ELECTROCHEMICAL BIOSENSOR TEST STRIP WITH RECOGNITION ELECTRODE AND READOUT METER USING THIS TEST STRIP**
ELEKTROCHEMISCHER BIOSENSOR-TESTSTREIFEN MIT ERKENNUNGSELEKTRODE UND AUSLESEMESSGERÄT, DAS DIESEN TESTSTREIFEN VERWENDET
BANDE D'ESSAI DE BIOCAPTEUR ELECTROCHIMIQUE A ELECTRODE DE RECONNAISSANCE ET DISPOSITIF DE LECTURE DE MESURE UTILISANT CETTE BANDE D'ESSAI

(30) Priority: 22.03.2000 KR 2000014421
(43) Date of publication of application: 29.01.2003
(73) Proprietor: All Medicus Co., Ltd, Dongan-Gu, Anyang, Kyunggi-Do 431-062 (KR)
(72) Inventor: RYU, Jun-Oh, Seoul 136-092 (KR); LEE, Jin-Woo, Syunghwa-mansion 402, Anyang, Kyunggi-Do 431-062 (KR); CHOI, In-Hwan, 401-1403, Dal-vit Maeul, Koyang, Kyunggi-Do 412-270 (KR)
(74) Representative: Beck, Michael Rudolf
(86) International application number: PCT/KR2001/000113
(87) International publication number: WO 2001/071328

(56) References cited:
- WO-A-01/33216
- WO-A1-99/30152
- US-A- 5 366 609
- US-A- 5 395 504
- US-A- 5 437 999
- US-A- 5 438 271
- US-A- 5 997 817

## Description

The present invention relates to an electrochemical biosensor test strip which can operate selectively quantitative analysis on specific biomaterials such as blood sugar, cholesterol and so forth and an electrochemical biosensor readout meter using this test strip. Further, the invention relates to electrochemical readout meter and a system comprising the test strip and the readout meter. The invention also relates to a method for using the readout meter in connection with the test strips.

Recently electrochemical biosensors are frequently used in medical field to analyze biomaterials including blood. Among those, enzyme-utilizing electrochemical biosensors are used most generally in hospitals and clinical labs because they are easy to apply, superior in measurement sensitivity, and allow rapid acquisition of test results. Enzyme analyzing method applied in electrochemical biosensors can be largely divided into chromophoric method which is a spectroscopic way and electrode method, an electrochemical way. Generally, the measuring time in chromophoric method takes longer than electrode method, and difficult to analyze significant biomaterials due to the measurement errors caused by the turbidity of biomaterials. Therefore, an electrode method is extensively applied in electrochemical biosensors recently. According to the method, in an electrode system established by screen printing, the quantitative measurement of a material of interest can be achieved by fixing a reagent onto the electrodes, introducing a sample, and applying an electric potential across the electrodes.

US 5,437,999 A discloses an electrochemical biosensor test strip with a precisely defined electrode field applying technologies generally used in PCB industries adequately to an electrochemical biosensor test strip. This electrochemical biosensor test strip can operate analysis very precisely with a small amount of samples.

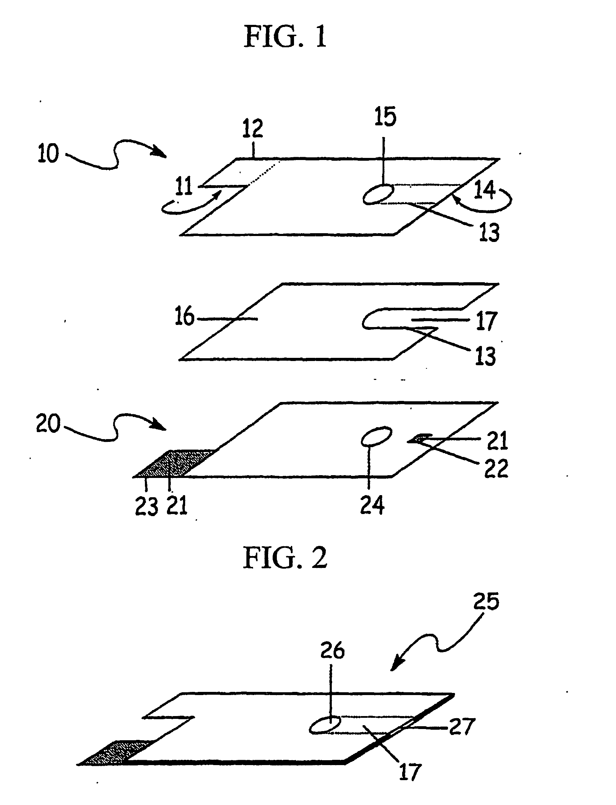

Fig. 1 is a disassembled perspective view of the opposing electrode type from the electrochemical biosensor test strip of the said U. S. Pat. and Fig. 2 shows the assembled state of the test strip of Fig. 1. As shown in the figure, the test strip comprises two electrodes: one is called a working electrode on which reactions occur and the other is called a reference electrode or a subsidiary electrode.

To disclose the components in detail referring to Fig. 1 and Fig. 2, an insulating substrate on which a reference electrode is formed, that is, a reference electrode element 10, is spatially detached from a working electrode element 20, an insulating substrate on which a working electrode is formed, by a spacer 16. Generally the spacer 16 is attached to the reference electrode element 10 during manufacturing process, but is illustrated separately from the reference electrode element 10 in Fig. 1. A first cutout portion 13 in the spacer 16 forms a capillary space 17 when placed between the reference electrode element 10 and the working electrode element 20. A first cutout portion 22 in the working electrode element 20 exposes a working electrode area and this working electrode area 21 is exposed to the capillary space 17. The first cutout portion 13 in the spacer 16 defines a reference electrode area 14, shown in dotted line in Fig. 1 when it is attached to the reference electrode element 10 and also this reference electrode area 14 is exposed to the capillary space 17. Second cutout portions 12, 23 expose a reference electrode area 11 and a working electrode area 21 respectively, and also serve as contact pads connecting a electrochemical biosensor test strip 25 to a biosensor measuring instrument(or a meter and a power source).

In an assembled state as shown in Fig. 2, the electrochemical biosensor test strip 25 has a first opening 27 on its one side. Also a vent port 24 in the working electrode element 20 and a vent port 15 in the reference electrode element 10 correspond and form a second opening 26. In use, a sample containing the material to be analyzed can be introduced into the capillary space 17 through the opening 26 or 27. In this case, the sample is spontaneously drawn into the electrochemical biosensor test strip by capillary action. As a result, the electrochemical biosensor test strip automatically controls the volume of sample to measure without the user's intervention.

This electrochemical biosensor test strip can operate very accurate electrochemical measurement, besides the advantage of requiring small amount of the sample, it has the advantage of separating the chemicals relevant to the working electrode or the reference electrode because it divides the two electrodes' manufacturing process.

But the conventional electrochemical biosensor measuring systems only could measure one material in each device and required the user's extreme caution to acquire the accurate results from various materials by one device. Therefore, the manufacturers of a biosensor readout meter had to focus greatly on producing process to eliminate malfunctioning in using the readout meter.

EP 0471986 A relates to a blood sugar measurement system using a disposable test strip, disclosing about the strip which discriminates whether blood is inserted to the test strip by measuring the electric resistance between a pair of electrodes and also accomplishes the various operations such as measurement mode modification by attaching a strip-shaped resistance to the test strip, or correcting the measurements of the readout meter etc.

US 4,999,582 A discloses a circuit which put on the reacting voltage to each end of the test strip after distinguishing whether the test strip is inserted into the biosensor readout meter.

Similarly, WO 01/33216, which is a document under Art. 54 (3) and (4) EPC, discloses a test strip with an insertion monitor. The purpose of the insertion monitor is checking whether the test strip has been inserted properly.

US 5,395,504 A discloses two electrodes termed working electrode and reference electrode on a biosensor test strip. Only one of these electrodes is covered by an reagent. The two electrodes further comprise zones for electrical connection with a readout meter. The readout meter has two tonges for electrical connection with these two zones.

US 5,366,609 A discloses a readout meter for conventional test strips having two electrodes. The readout meter comprises an exchangeable hardware piece, i.e. a ROM key to easily update an analysing algorithm.

US 5,438,271 A discloses a test strip having to electrodes, i.e. a working electrode and a reference electrode. US 5,438,271 A further teaches a check strip for calibrating the corresponding read-out meter. The check strip exhibits three electrodes. However, two of these electrodes have been shorted by wire so that their electrical potential will be always identical. Thus, US 5,438,271 A describes a circuit distinguishing whether a strip is properly inserted into the biosensor readout meter and discriminating whether the inserted strip is a test strip or a correction strip. Accordingly, the promblems already discussed in connection with US 5,437,999 A remain the same.

Preexisting biosensor readout meters could not analyze the different materials with one biosensor readout meter because they only have the function to distinguish whether the strip is inserted and to discriminate whether the inserted strip is a test strip or a correction strip.

In order to overcome the shortcomings inherent to the afore-mentioned prior art the invention provides an electrochemical biosensor test strip according to claim 1, an electrochemical biosensor readout meter according to claim 5, a system according to claim 7, and a method according to claim 8.

Further advantageous embodiments are laid down in the dependent claims.

The test strip of the present invention can automatically make the readout meter recognize what material the fixed reagent on the test strip is to detect.

Also, the inventive biosensor readout meter can operate quantitative analysis on various materials selectively depending on the test strip.

In addition, this invention provides a correction test strip used for automatic correction of a readout meter to measure the electric current flowing in the test strip accurately as analyzing material's concentration through reactions between the material to be analyzed and the reagent.

The first distinction of the electrochemical biosensor test strip of this invention is the recognition electrode, established at the fixed position of the test strip to indicate the material which the reagent fixed on the test strip is to analyze(hereinafter referred to 'analyte').

Also, the second distinction of the biosensor readout meter of this invention is that the quantitative analysis of the analytes is feasible by distinguishing the analyte on the test strip after automatically detecting the position of the recognition electrode depending on the insertion of the test strip and executing selectively the appropriate algorithm for this analyte.

Also, the third distinction of the biosensor readout meter according to this invention is a socket device comprising an electric connection device of which the connecting terminal is formed on the PCB by pattern, and an compressing device which establish the electric connection between the electrode of the test strip and the connecting terminal of the electric connection device by compressing the test strip to the electric connection device.

In addition, the electrochemical biosensor readout meter according to this invention is a readout meter using the electrochemical biosensor test strip from the first distinction above-mentioned, comprising a detection device detecting the recognition electrode, a working voltage generating circuit which applies the working voltage to the working electrode, a voltage conversion device which converts the electric current flowing through the working electrode to an analogue voltage signal, an A/D converter which converts the analogue signal to a digital signal, and a controller which operates the working voltage generating circuit to apply a first voltage to the working electrode when the test strip is inserted into the readout meter(t0), and to apply a second voltage to the working electrode for a fixed period of time after a period of time (12) depending on the position of the recognition electrode detected by the recognition electrode detecting device when the sample is inserted(t1), then(t3) to apply a third voltage to the working electrode and measures the concentration of the analyte of interest depending on the position of the recognition electrode by reading the digital signal from the A/D converter after a fixed period of time(t4) from the applying point(t3) of the third voltage.

With this invention mentioned above, it is possible to operate the quantitative analysis on various blood components such as blood sugar, cholesterol, and even GOT, GPT, etc with one readout meter since the test strip can automatically make the readout meter recognize the analytes of interest without the button operation. Also, since the readout meter does not require additional sockets, manufacturing expenses are very low. In addition, it is possible to make a checkstrip easily with the recognition electrode and the resistance, and to measure the precise concentration of the analyte of interest from this.

### BRIEF DESCRIPTION OF THE INVENTION

Fig. 1 is a disassembled perspective view of a conventional electrochemical biosensor test strip.
Fig. 2 is a perspective view illustrating an assembled state of the test strip of Fig. 1.
Fig. 3 shows an embodiment of the test strip of this invention, Fig. 3a is a plan view and Fig. 3b is a left-side view plan.
Fig. 4 is a plan view illustrating two kinds of test strip with different position of recognition electrode.
Fig. 5 is a perspective view of an electric connection device composing a socket device of the readout meter.
Fig. 6 is a plan view of an electric connection device composing a socket device of the readout meter.
Fig. 7 is a perspective view of a compressing device composing a socket device of the readout meter.
Fig. 8 is a circuit diagram of the readout meter of this invention.
Fig. 9a shows a waveform of working voltage applied to a working electrode, and Fig. 9b shows a waveform of electric current flowing in the working electrode.
Fig. 10 is a flow chart illustrating the operations of the readout meter of this invention.
Fig. 11 is a plan view of correction test strip of this invention.

### BEST MODES FOR CARRYING OUT THE INVENTION

Hereinafter, the present invention is described specifically with reference to the embodiments illustrated in the drawings. But the embodiments below are to describe the invention in detail, not to limit the range of the invention.

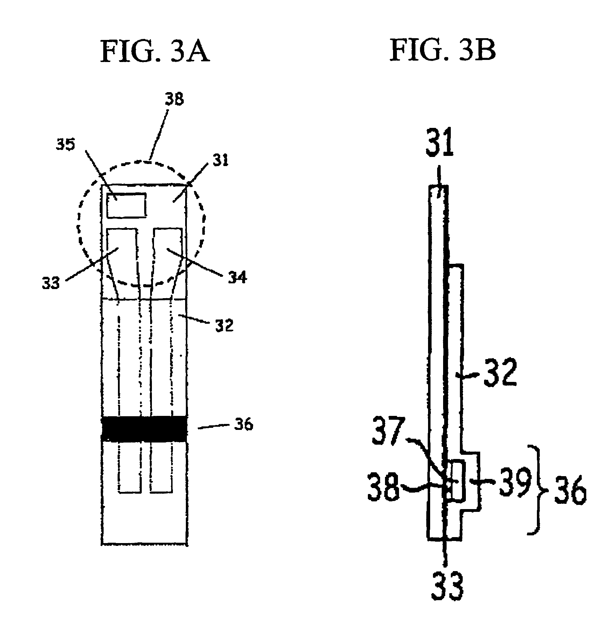

Fig. 3 shows an embodiment of a test strip from this invention, Fig. 3a is a plan view, and Fig. 3b is a left-side view plan. Referring to Fig. 3a, 33 is a working electrode on which oxidation-reduction reaction between an analyte of interest and a reagent occurs, 34 is a reference electrode, and 35 indicates a recognition electrode.

As shown in Fig. 3a, the recognition electrode is established at a fixed position on the test strip which is determined depending on what material the reagent fixed across from the capillary space 36 to the working electrode and the reference electrode is to detect. When this test strip is inserted into the biosensor readout meter, the biosensor readout meter can identify what material is that the test strip is to analyze by discriminating the position of the recognition electrode on the test strip.

The materials of an insulating substrate 31 of this invention, can be of various insulators, but to mass-produce the electrochemical biosensor test strip of this invention simultaneously, it is preferable to have the flexibility suitable for roll processing and the strength for supporting. Preferably, high molecular compounds such as poly ester, poly carbonate, poly stylene, poly imide, poly vinyl chloride, poly ethylene, etc is recommended and especially poly ethylene telephthalate can be used.

It is preferable to form the electrode strips 33, 34, 35 on the insulating substrate 31 with sputtering using a shadow mask. That is, the electrode strips 33, 34, 35 is satisfactorily established on the insulating substrate 31 when removing the shadow mask after placing the shadow mask patterned after the electrode strip on the insulating substrate and operating the regular electric sputtering. In this case, a thin stainless metal plate is preferred for the shadow mask. Proper thickness of the shadow mask should be about 0.2mm. If the electrode strip is established by sputtering using a shadow mask, very detailed electrode about 0.1mm can be established easily without extra manufacturing process.

Preferred material for the electrode is noble metal such as palladium, platinum, gold, silver, etc. For noble metal is superb in electrochemical properties, such as excellent stability and reproducibility in the surface area of the electrode, and property of being difficult to oxidize, and so forth. Especially, gold is recommended for the material for the electrode. Gold is relatively cheap, and easy to process, and has the favorable adhesion with plastic and high-conductivity. So even if a gold electrode is established thinly in about 100nm of thickness by sputtering, the electrode has a low electrical resistance, and adheres solidly to an insulating substrate such as plastic film or the like so that it is suitable as a disposable electrode.

The reagent 38 used here can include enzymes, redox mediator, hydrophile high molecular compounds, and surfactant. The enzymes varies depending on the materials to detect or to analyze. For example, glucose oxidase can be used in case of analyzing or detecting glucose. Used redox mediator includes potassium ferricyanide, imidazole osmium mediator which is described in U. S. Pat. No.5,437,999, etc. Buffer, film formatant, and surfactant can be included as the reagent 38 besides enzyme and redox mediator. Buffer is to maintain the conditions such as pH at a regular level while the reagent 38 and the sample to analyze is reacting, hydrophile high molecular compound in need to fix the reagent on the electrode easily, and surfactant is to ease the process when the sample to analyze flows into the capillary space by capillary action. For instance, reagent to detect glucose can be established by compounding potassium ferricyanate, potassium phosfate buffer, cellulose, hydroxiletil cellulose, triton X-100 surfactant, sodium sucinate and glucose oxidase, and refer to U. S. Pat. No.5,762,770 for the examples of usable enzymes and redox mediator and its specific manufacturing process.

Principle of measuring the concentration of the material to analyze or detect from the sample using the electrochemical biosensor test strip of this invention is as followed. For example, when glucose is to be detected and analyzed from the blood sample, glucose oxidase used as an enzyme, and potassium ferricyanide as redox mediator, glucose is oxidized and ferricyanide is deoxidized into ferrocyanide. At this time, glucose oxidase works as a catalyzer. When voltage is put on to both electrode after a certain reaction time by a power supply, electric current is generated by electron transition caused by reoxidization of the ferrocyanide. Voltage put on to the two electrodes should be less than 300mV, and about 100mV is used considering the properties of the mediator.

An electric current measured by the method above can be correlated to the concentration of the analyte from the sample by applying algorithm stored within the biosensor readout meter. Also, by integrating the current to a certain period of measurement from the electric current-measurement time related curve, the total amount of electric charge(this electric charge is proportional to the concentration of the analyte of interest) can be achieved during that period.

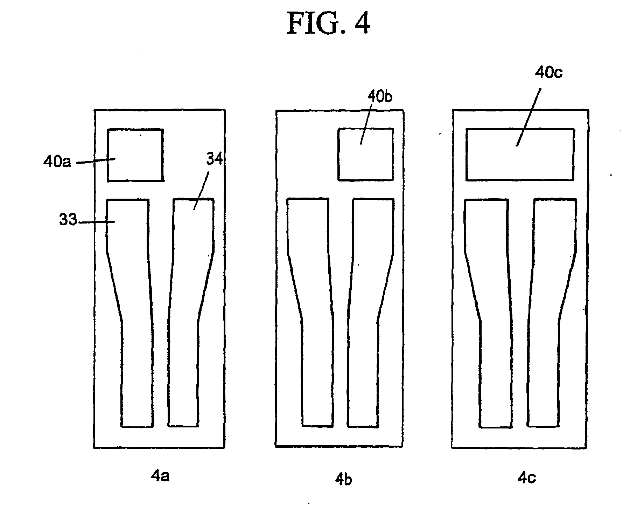

Fig. 4 illustrates examples of two kinds of electrochemical biosensor test strip which has different positions of the recognition electrode in accordance with this invention, Fig. 4a is a test strip for measuring blood sugar, Fig. 4b is a test strip for measuring cholesterol, and Fig. 4c is a correction test strip (hereinafter referred to "check strip") for correcting the readout meter to change the electric current from the test strip into the precise concentration, by supplying the information of the test strip to the readout meter. Recognition electrodes 40a, 40b, 40c are established in different positions as illustrated in Fig. 4 to notify the readout meter of the fact that the different reagents are fixed onto the capillary space depending on the analytes of interest automatically without any manual button operation.

This position of the recognition electrode can be arranged two-dimensionally on the test strip. When the recognition electrode is arranged two-dimensionally, the recognition electrode with various informations of the position can be established easily on the limited test strip.

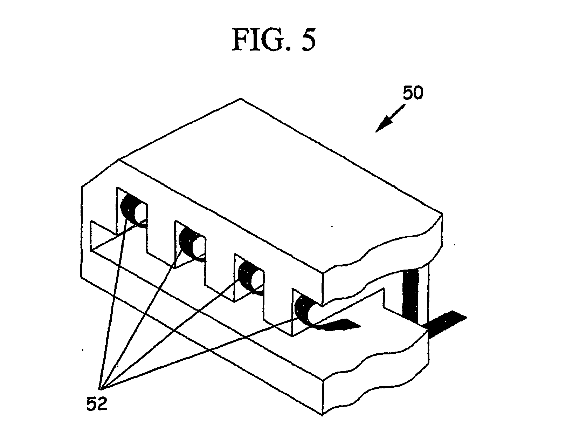

Fig. 5 is a perspective view illustrating a socket device of the conventional readout meter. As illustrated in Fig. 5, since a socket device 50 of the conventional readout meter has one-dimensional arrangement of a metal strip 52 in a widthwise direction of the test strip, the number of the electrodes on the test strip which such a socket device can permit, is limited. Also, it was hard to manufacture and expensive.

A socket device of the biosensor readout meter of this invention is composed of an electric connection device of which the connecting terminal is formed in PCB pattern, and a compressing device which electrically connects the electrode of the test strip to the connecting terminal of the electric connection device by compressing the test strip to the electric connection device.

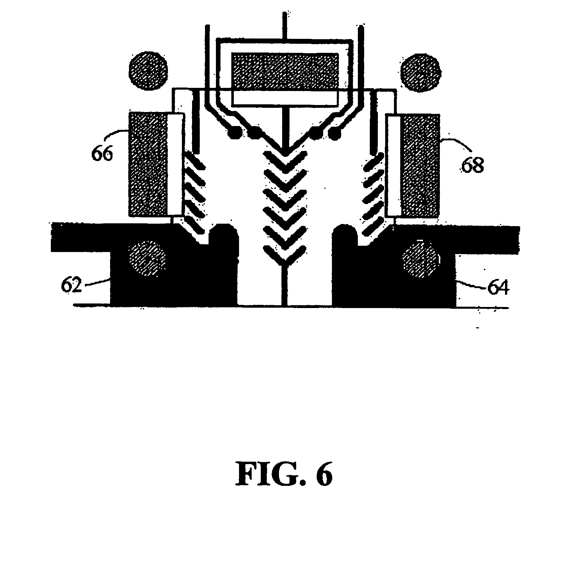

Fig. 6 is a plan view illustrating PCB pattern of the electric connection device composing the socket device of the readout meter of this invention. Referring to Fig. 6, the connecting terminal is formed in pattern on PCB corresponding to the end portion of the working electrode, and the reference electrode on the test strip and the position of the recognition electrode when the test strip is fully inserted into the socket device of the readout meter.

Referring to Fig. 4 and Fig. 6 about the electrical connection between the test strip and the biosensor readout meter, when the test strip of Fig. 4 is inserted into the socket device of the biosensor readout meter of Fig. 6 which is composed of an electric connection device, the working electrode 33 on the test strip gets electrically connected to the working electrode connecting terminal 62 on the electric connection device 50. The reference electrode 34 is electrically connected to the reference electrode connecting terminal 64, the recognition electrode for indicating blood sugar 40a to the first recognition electrode connecting terminal 66, and the recognition electrode for indicating cholesterol 40b to the second recognition electrode connecting terminal 68. The recognition electrode connecting terminal can easily be established two-dimensionally onto PCB in Fig. 6. Therefore, for numerous recognition electrode connecting terminals can be established on the electric connection device of the socket device, quantitative analysis on various materials with only one readout meter is possible. Also, since the connecting terminal can be made two-dimensionally, process margin is large.

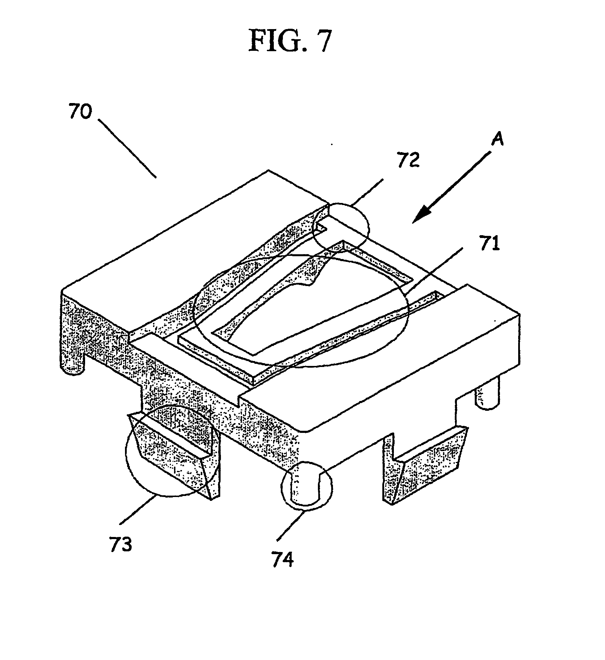

Fig. 7 is a perspective view illustrating the compressing device for compressing the test strip of Fig. 4 to the electric connection device of Fig. 6 to connect both electrically. The electric connection device of Fig. 6 is installed below the compressing device illustrated in Fig. 7. The compressed part 71 is lifted up when the test strip is inserted in the direction of A so that the connecting area 72 is forced in the twisted direction, then by this force, the compressed part 71 pushes the test strip to the electric connection device installed below. 73 is a fixed area in Fig. 7, which is inserted into a groove on the electric connection device 60, fixes the compressing device 70 to the electric connection device 60.

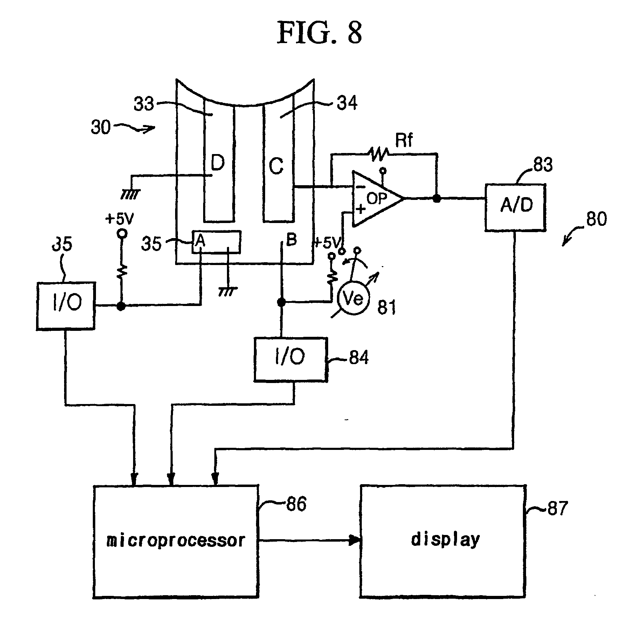

Fig. 8 is the circuit diagram of the electrochemical biosensor readout meter of this invention. When the test strip 30 as illustrated in Fig. 4a is inserted properly into the electric connection portion of the readout meter 80, the voltage of the contact point A where the recognition electrode 35 on the test strip 30 is connected drops from 5V to 0V. This change of the voltage is detected in I/O 85 and informed to the microprocessor 86, therefore the insertion of the test strip into the electric connection portion of the readout meter is recognized. Also, since I/O 85 maintains at 0V and I/O 84 at 5V, the microprocessor 86 can recognize that the inserted test strip is for measuring blood sugar. When the test strip of Fig. 4b is inserted, I/O 25 of the electric connection portion of the readout meter maintains at 5V and I/O 24 at 0V, so that the microprocessor automatically recognizes as a test strip for cholesterol, and when the test strip of Fig. 4c is inserted, the microprocessor automatically recognizes the test strip as a check strip since both I/O 24 and I/O 25 of the electric connection portion of the readout meter maintain at 0V. The check strip revises the readout meter to measure the concentration of the analyte more accurately by supplying the informations on the test strip to the readout meter.

When the test strip for measuring blood sugar as illustrated in Fig. 4a is inserted into the electric connection portion of the readout meter 80, the switch of the working voltage generator 81 is closed on the operational amplifier OP, and the working voltage generator 81 generates 300mV. The generated voltage puts on 300mV of working voltage between the reference electrode 33 and the working electrode 34 of the test strip due to the feedback of the operational amplifier OP.

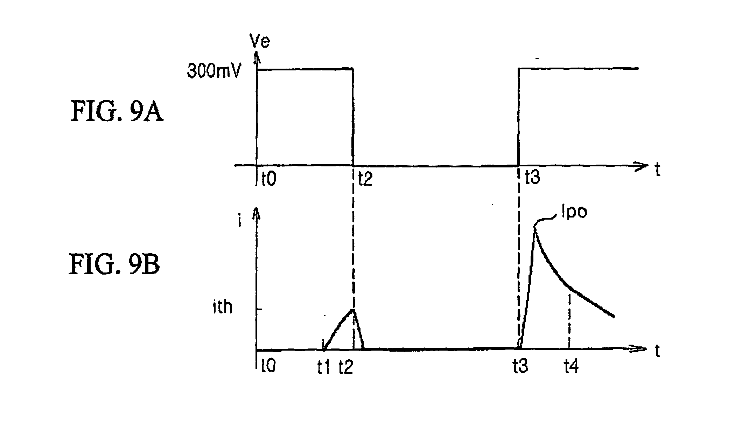

From this point, wait until blood is inserted into the reaction part 36 of the test strip. When blood is inserted at t1 of Fig. 9b, electric charge is generated due to the chemical reactions between the blood and the reagent fixed in the reaction part, and the electric charge becomes electric current by the working voltage which is applied to the working electrode. This electric current is inputted into A/D converter 83 via resistance(Rf). The microprocessor 86 measures the amount of electric current by reading the changes in value of the A/D converter, and when the electric current is above a fixed value(t2), recognizes as blood is inserted. When the blood is not inserted, some electric current may flow in input terminal of the A/D 83 converter due to noise, even if there is no flowing electric current theoretically. Therefore, to prevent the malfunction caused by noise, the microprocessor recognizes as blood is inserted only when over a certain amount of electric current value is read on the A/D converter 83 as illustrated in Fig. 9b. Since the range of electric current is different depending on the analytes of interest, the critical electric current value(ith), which is used to detect whether blood is inserted, varies corresponding to the analytes. Since the biosensor readout meter of this invention can automatically distinguish which material the test strip is to analyze with the recognition electrode 35, it can apply a critical electric current value(ith) differently depending on the analytes by reading the values already stored inside the readout meter.

At the point(t2) the microprocessor 86 recognizes as blood is inserted, the voltage of working voltage generator 81 turns almost 0V. Here, electric charge is accumulated around the working electrode due to the chemical reactions between the blood and the reagent of the reaction part 36. After a certain reaction period, the voltage of working voltage generator 81 turns 300mV at the point of t3. When 300mV is put on as a working voltage as illustrated in Fig. 9a, the electric current flows through working electrode as in Fig. 9b, and after a certain period t4, measures the electric current flowing through the test strip 10. The microprocessor 86 is provided with ROM(not illustrated) which stores the relations between the electric current and the concentration of the analytes of interest. Therefore it is possible to measure the concentration of blood sugar from blood by reading the electric current at t4 point. If the test strip for cholesterol, illustrated in Fig. 4b, is used, the electric current of t4 point is related to the concentration of cholesterol in blood.

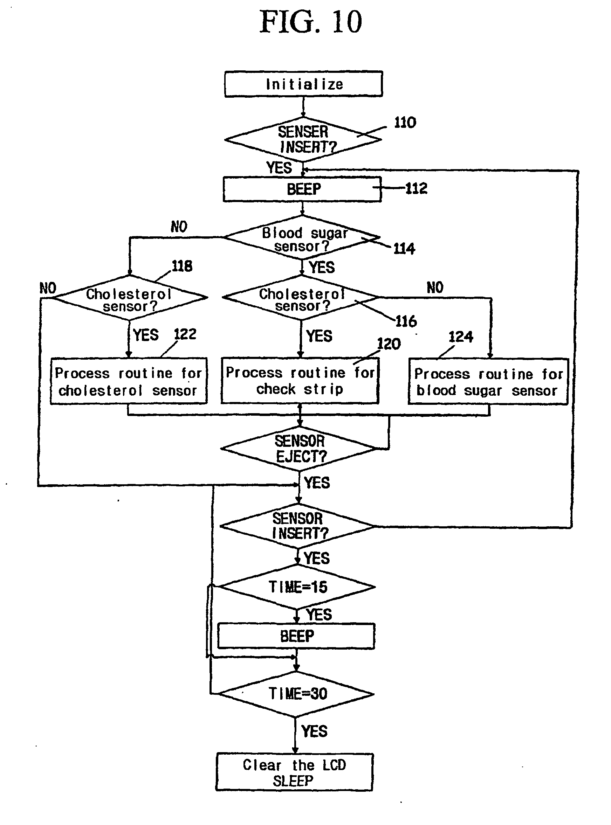

Fig. 10 is a flow chart indicating operation orders of the readout meter of this invention. When the power button is pressed, the readout meter confirms whether the test strip is inserted 110, blinking an icon indicating that to insert the test strip into the LCD. When the test strip is inserted, buzzer rings and the readout meter confirms whether the recognition electrode is established on the blood sugar indicating position and cholesterol indicating position on the test strip in order 112, 114, 116, 118. If the recognition electrode is established on both the blood sugar indicating position and cholesterol indicating position, executes the check strip process routine 120, when the recognition electrode is established only on cholesterol indicating position, executes cholesterol process routine 122, and when the recognition electrode is established only on blood sugar indicating position, executes blood sugar process routine 124. After the execution of process routine, the test strip is removed and the readout meter is automatically shut down after a while without insertion of any new test strip. When new test strip is inserted, buzzer rings again and the readout meter re-operates the step 112, 114, 116, 118 confirming the position of recognition electrode on the test strip.

Not only confirming whether the test strip is inserted, it is possible to include another step confirming whether the memory button of the readout meter is pressed, in step 110. In case the memory button is pressed, the values stored inside EEPROM of the readout meter is fetched.

If the test strip is not inserted for a certain time, alarm rings and automatically turns the power off. When the test strip slips out of the readout meter while measuring, re-operates from the step 110.

The execution of blood sugar process routine 124 is as followed. First, the readout meter indicates blood sugar on the LCD, and confirms whether the sample is inserted with blinking an icon. when the sample is inserted, waits some time, for instance 15 seconds, for the sample and the reagent to react. After 15 seconds, applies about 0.1V of voltage between the working electrode and the reference electrode on the test strip for a while, for instance 15 seconds, and measures the electric current flowing on the electrode of the test strip, changes it into the blood sugar value, stores the value in EEPROM and displays on LCD.

The execution of cholesterol process routine 112 is identical to the execution of blood sugar process routine 124, except that the corresponding relations between the cholesterol values and the electric current on the electrode of the test strip are different.

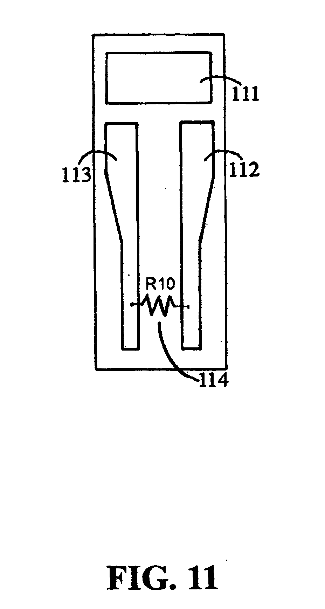

Fig. 11 is a diagram illustrating an embodiment of a check strip of this invention. In Fig. 11, 111 is a recognition electrode, 112 is a reference electrode, 113 is a working electrode, and 114 is a resistance to supply the readout meter of informations on the test strip. As mentioned above, When a check strip 110 is inserted into the readout meter as illustrated in Fig. 8, the inserted test strip is recognized as a check strip by the microprocessor 86 since the point A, B both turns to 0V. In a check strip 110, the reference electrode 112 and the working electrode 113 is connected to the resistance 114. This resistance 114 makes a certain electric current flow through the working electrode 113 when a working voltage is applied to the working electrode 113. The electric current makes the readout meter recognize the informations on the test strip since it is converted into voltage by the operational amplifier(OP), converted into digital voltage signal by the A/D converter 83 and then read by the microprocessor 86. The readout meter can measure the concentration of the analytes more accurately by using these informations.

## Claims

1. Electrochemical biosensor test strip for measuring concentration of analyte electrochemically by being used with an electrochemical biosensor readout meter, comprising:
- a first insulating substrate having an upper surface and a lower surface;
- a working electrode (33) formed on the upper surface of the first insulating substrate in a lengthwise direction;
- a reference electrode (34) formed on the upper surface of the first insulating substrate in a lengthwise direction;
- a reagent (38) for reacting with the analyte to generate an electric current corresponding to the concentration of the analyte, the reagent being fixed over and across the working electrode and the reference electrode; and
- a recognition electrode (35) formed on a predetermined position of the upper surface of the first insulating substrate, the position of the recognition electrode being indicative for the material of the reagent fixed on the test strip, whereby the recognition electrode indicates the use of the test strip to the readout meter when the test strip is inserted to the readout meter.

2. Electrochemical biosensor test strip as set forth in claim 1, further comprising a second insulating substrate arranged on the upper surface of the first insulating substrate, and the first insulating substrate and the second insulating substrate forming a sample input entrance to the position of the first insulating substrate where the reagent (38) is fixed.

3. Electrochemical biosensor test strip as set forth in claim 2, wherein the sample input entrance is formed of a capillary space (36).

4. Electrochemical biosensor test strip as set forth in claim 1, wherein the recognition electrode (35) is arranged in two dimensions on the upper surface of the first insulating substrate.

5. Electrochemical biosensor readout meter (80) for measuring concentration of analyte electrochemically by being used with an electrochemical biosensor test strip having a working electrode (33), a reference electrode (34) and a recognition electrode (35) formed on a predetermined position of the test strip on an upper surface of an insulating substrate, comprising;
- a socket device which is electrically connected to the electrodes (33, 34, 35) of the test strip when the test strip is inserted to the readout meter (80), and generates a test strip insertion signal, said socket device comprising means for automatically detecting the position of the recognition electrode (35) on different test strips, the position of said recognition electrode being indicative for the material of the reagent fixed on the test strip in order to indicate the type of the test strip by the position of the recognition electrode (35), and generating a test strip type signal by detecting the position of the recognition electrode (35);
- an electric current measuring device for measuring value of electric current flowing through the electrodes of the test strip, the electric current measuring device being connected electrically with the socket device;
- an analyzing device which analyzes concentration of the analyte according to the measured electric current value and the test strip type signal; and
- an indicating device indicating the analyzed concentration of the analyte.

6. Electrochemical biosensor readout meter as set forth in claim 5, wherein the socket device comprises an electric connection device of which the connecting terminal is formed in PCB pattern, and a compressing device electrically connecting the electrodes of the test strip and the connecting terminal (62, 66) on the electric connection device by compressing the test strip to the electric connection device.

7. Electrochemical biosensor system comprising an electrochemical biosensor test strip and a biosensor readout meter, wherein the electrochemical biosensor test strip includes:
- a first insulating substrate having an upper surface and a lower surface;
- a working electrode (33) formed on the upper surface of the first insulating substrate in a lengthwise direction;
- a reference electrode (34) formed on the upper surface of the first insulating substrate in a lengthwise direction;
- a reagent (38) for reacting with the analyte to generate a current corresponding to the concentration of the analyte, the reagent being fixed over and across the working electrode and the reference electrode; and
- a recognition electrode (35) formed on a predetermined position of the upper surface of the first insulating substrate, the position of the recognition electrode being indicative for the material of the reagent fixed on the test strip, and
the biosensor readout meter (80) includes:
- a socket device which is electrically connected to the electrodes of the test strip when the test strip is inserted to the readout meter, and generating a test strip insertion signal and a test strip type signal by detecting the position of the recognition electrode;
- an electric current measuring device for measuring value of electric current flowing through the electrodes of the test strip, the electric current measuring device being connected electrically with the socket device;
- an analyzing device which analyzes concentration of the analyte according to the measured electric current value and the test strip type signal; and
- an indicating device indicating the analyzed concentration of the analyte.

8. Method for operating an electrochemical biosensor readout meter measuring concentration of analyte electrochemically in connection with an electrochemical biosensor test strip according to one of claims 1 to 4, comprising the steps of:
- confirming whether the test strip is inserted into the readout meter when power button is pressed;
- distinguishing the position of the recognition electrode to determine use of the test strip according to the material of the reagent (38); and
- executing process routine corresponding to the use of the test strip determined by the position of the recognition electrode.

9. Method as set forth in claim 8, wherein the confirming step further comprises the step of turning the readout meter (80) off when the test strip is not inserted for a certain period of time.

10. Method as set forth in claim 8 or 9, wherein the confirming step further comprises the steps of confirming whether the memory button of the readout meter (80) is pressed, and indicating after reading the values stored inside the readout meter when the memory button is pressed.

11. Method as set forth in one of claims 8 to 10, further comprising the step of re-operating from the test strip confirming step when the test strip slips out of the readout meter (80).

12. Method as set forth in one of claims 8 to 11, wherein the process routine executing step comprises:
- confirming whether the sample is inserted;
- analyzing the concentration of the analyte of interest by measuring the electric current with applying a certain voltage to the electrode on the test strip after waiting a certain period of time for the sample and the reagent (38) to react in case the sample is inserted; and
- outputting the concentration value of the analyte.

13. Readout meter according to claim 5 or 6 using the electrochemical biosensor test strip as set forth in one of claims 1 to 4, further comprising:
- a working voltage generating circuit applying a working voltage to the working electrode (33);
- a voltage converting device converting the electric current flowing through the working electrode (33) into an analogue voltage signal;
- an A/D converter converting the analogue voltage signal from the voltage converting device into a digital voltage signal;
- a controller which operates the working voltage generating circuit to apply a fixed working voltage to the working electrode when the test strip is inserted into the readout meter (t0), and not to apply any voltage for a fixed period time when the sample is inserted (t1) and the digital voltage signal from the A/D converter turns to a fixed critical voltage (t2) depending on the analyte of interest, and then (t3) re-operates the working voltage generating circuit to apply the working voltage to the working electrode, and measures the concentration of the analyte by distinguishing the digital voltage signal from the applying A/D converter after a fixed period of time from the applying point of working voltage (t3).

14. Electrochemical biosensor system according to claim 7, further comprising an electrochemical biosensor adjustment strip for adjusting the electrochemical biosensor readout meter (80), said adjustment strip comprising:
- a first insulating substrate;
- two electrodes (33, 34) formed on the first insulating substrate in a lengthwise direction;
- a resistor connected between the two electrodes, having a predetermined resistance value for adjusting the readout meter; and
- a recognition electrode (35) formed on a predetermined position on the first insulating substrate and indicating that the test strip is used for adjusting the readout meter.

## Patentansprüche

1. Elektrochemischer Biosensor-Teststreifen zum elektrochemischen Messen der Konzentration eines Analyten bei Verwendung mit einem elektrochemischen Biosensor-Auslesemessgerät, umfassend:
- ein isolierendes Substrat, das eine obere Fläche und eine untere Fläche aufweist;
- eine Arbeitselektrode (33), die an der oberen Fläche des ersten isolierenden Substrats in einer Längsrichtung ausgebildet ist;
- eine Referenzelektrode (34), die an der oberen Fläche des ersten isolierenden Substrats in einer Längsrichtung ausgebildet ist;
- ein Reagens (38) zum Reagieren mit dem Analyten zur Erzeugung eines elektrischen Stroms entsprechend der Konzentration des Analyten, wobei das Reagens über und zwischen der Arbeitselektrode und der Referenzelektrode angebracht ist; und
- eine Erkennungselektrode (35), die an einer vorgegebenen Position der oberen Fläche des ersten isolierenden Substrats ausgebildet ist, wobei die Position der Erkennungselektrode das Material des an dem Teststreifen angebrachten Reagens **kennzeichnet**, so dass die Erkennungselektrode dem Auslesegerät die Verwendung des Teststreifen anzeigt, wenn der Teststreifen in das Auslesegeräte eingebracht wird.

2. Elektrochemischer Biosensor-Teststreifen nach Anspruch 1, weiterhin umfassend ein zweites isolierendes Substrat, das an der oberen Fläche des ersten isolierenden Substrats angeordnet ist, wobei das erste isolierende Substrat und das zweite isolierende Substrat einen Probeneinführeingang zu der Stelle des ersten isolierenden Substrats bilden, wo das Reagens (38) angebracht ist.

3. Elektrochemischer Biosensor-Teststreifen nach Anspruch 2, bei dem der Probeneinführeingang als Kapillarraum (36) ausgebildet ist.

4. Elektrochemischer Biosensor-Teststreifen nach Anspruch 1, bei dem die Erkennungselektrode (35) in zwei Dimensionen an der oberen Fläche des ersten isolierenden Substrats angeordnet ist.

5. Elektrochemisches Biosensor-Auslesemessgerät (80) zum elektrochemischen Messen der Konzentration eines Analyten durch Verwendung mit einem elektrochemischen Biosensor-Teststreifen, der eine Arbeitselektrode (33), eine Referenzelektrode (34) und eine Erkennungselektrode (35) an einer vorgegebenen Position des Teststreifens an einer oberen Fläche eines isolierenden Substrats aufweist, umfassend:
- eine Fassungseinrichtung, die elektrisch mit den Elektroden (33, 34, 35) des Teststreifens verbunden ist, wenn der Teststreifen in das Auslesemessgerät (80) eingebracht ist und ein Teststreifen-Einführsignal erzeugt, wobei die Fassungseinrichtung Mittel zur automatischen Erfassung der Position der Erkennungselektrode (35) an unterschiedlichen Teststreifen aufweist, wobei die Position der Erkennungselektrode das Material des an dem Teststreifen angebrachten Reagens **kennzeichnet,** um den Typ des Teststreifens durch die Position der Erkennungselektrode (35) anzuzeigen, und ein Teststreifen-Typensignal durch Erfassung der Position der Erkennungselektrode (35) generiert;
- eine elektrische Strommesseinrichtung zur Messen des Werts des elektrischen Stroms, der durch die Elektroden des Teststreifens fließt, wobei die elektrische Strommesseinrichtung elektrisch mit der Fassungseinrichtung verbunden ist;
- eine Analyseeinrichtung, welche die Konzentration des Analyten aus dem gemessenen elektrischen Stromwert und dem Teststreifen-Typensignal analysiert; und
- eine Anzeigeeinrichtung, welche die analysierte Konzentration des Analyten anzeigt.

6. Elektrochemisches Biosensor-Auslesemessgerät nach Anspruch 5, bei dem die Fassungseinrichtung eine elektrische Verbindungseinrichtung aufweist, deren Verbindungsanschlüsse als gedruckte Schaltungsmuster ausgebildet sind, und eine Niederhalteeinrichtung, welche die Elektroden des Teststreifens und die Verbindungsanschlüsse (62, 66) an der elektrischen Verbindungseinrichtung durch Andrücken des Teststreifens an die elektrische Verbindungseinrichtung elektrisch verbindet.

7. Elektrochemisches Biosensor-System, umfassend einen elektrochemischen Biosensor-Teststreifen und ein Biosensor-Auslesemessgerät, wobei der elektrochemische Biosensor-Teststreifen umfasst:
- ein isolierendes Substrat, das eine obere Fläche und eine untere Fläche aufweist;
- eine Arbeitselektrode (33), die an der oberen Fläche des ersten isolierenden Substrats in einer Längsrichtung ausgebildet ist;
- eine Referenzelektrode (34), die an der oberen Fläche des ersten isolierenden Substrats in einer Längsrichtung ausgebildet ist;
- ein Reagens (38) zum Reagieren mit dem Analyten zur Erzeugung eines elektrischen Stroms entsprechend der Konzentration des Analyten, wobei das Reagens über und zwischen der Arbeitselektrode und der Referenzelektrode angebracht ist; und
- eine Erkennungselektrode (35), die an einer vorgegebenen Position der oberen Fläche des ersten isolierenden Substrats ausgebildet ist, wobei die Position der Erkennungselektrode das Material des an dem Teststreifen angebrachten Reagens **kennzeichnet**, und
das Biosensor-Auslesemessgerät (80) umfasst:
- eine Fassungseinrichtung, die elektrisch mit den Elektroden des Teststreifens verbunden ist, wenn der Teststreifen in das Auslesemessgerät eingebracht ist und ein Teststreifen-Einführsignal und ein Teststreifen-Typensignal durch Erfassung der Position der Erkennungselektrode generiert;
- eine elektrische Strommesseinrichtung zur Messen des Werts des elektrischen Stroms, der durch die Elektroden des Teststreifens fließt, wobei die elektrische Strommesseinrichtung elektrisch mit der Fassungseinrichtung verbunden ist;
- eine Analyseeinrichtung, welche die Konzentration des Analyten aus dem gemessenen elektrischen Stromwert und dem Teststreifen-Typensignal bestimmt; und
- eine Anzeigeeinrichtung, welche die analysierte Konzentration des Analyten anzeigt.

8. Verfahren zum Betrieb eines elektrochemischen Biosensor-Auslesemessgeräts, das die Konzentration eines Analyten elektrochemisch in Verbindung mit einem elektrochemischen Biosensor-Teststreifen nach einem der Ansprüche 1 bis 4 misst, umfassend die folgenden Schritte:
- Bestätigen, ob der Teststreifen in das Auslesemessgerät eingebracht worden ist, wenn die Einschalttaste gedrückt wird;
- Unterscheiden der Position der Erkennungselektrode zur Bestimmung der Verwendung des Teststreifens gemäß dem Material des Reagens (38); und
- Ausführen der Verfahrensroutine gemäß der Verwendung des Teststreifens, die durch die Position der Erkennungselektrode bestimmt wurde.

9. Verfahren nach Anspruch 8, bei dem der Bestätigungsschritt weiterhin den Schritt des Ausschaltens des Auslesemessgeräts (80) umfasst, wenn der Teststreifen nicht innerhalb einer bestimmten Zeitdauer eingebracht wird.

10. Verfahren nach Anspruch 8 oder 9, bei dem der Bestätigungsschritt weiterhin die Schritte des Bestätigens, ob die Speichertaste des Auslesemessgerät (80) gedrückt wird, und des Anzeigens der in dem Anzeigemessgerät gespeicherten Werte nach dem Lesen, wenn die Speichertaste gedrückt wird, umfasst.

11. Verfahren nach einem der Ansprüche 8 bis 10, weiterhin umfassend den Schritt eines Wiederholens ab dem Teststreifen-Bestätigungsschritt, wenn der Teststreifen aus dem Anzeigemessgerät (80) herausrutscht.

12. Verfahren nach einem der Ansprüche 8 bis 11, bei dem der Schritt des Ausführens der Verfahrensroutine umfasst:
- Bestätigen, ob die Probe eingeführt ist;
- Analysieren der Konzentration des interessierenden Analyten durch Messen des elektrischen Stroms durch Anlegen einer definierten Spannung an die Elektroden des Teststreifens nach Abwarten einer definierten Reaktionszeiten für die Probe und des Reagens (38), für den Fall, dass die Probe eingeführt worden ist; und
- Ausgeben des Konzentrationswerts des Analyten.

13. Auslesemessgerät nach Anspruch 5 oder 6, das den elektrochemischen Biosensor-Teststreifen nach einem der Ansprüche 1 bis 4 verwendet, weiterhin umfassend:
- eine Schaltung zur Erzeugung einer Arbeitsspannung, welche eine Arbeitsspannung an die Arbeitselektrode (33) anlegt;
- eine Spannungskonvertierungseinrichtung, welche den elektrischen Strom, der durch die Arbeitselektrode (33) fließt, in ein analoges Spannungssignal umwandelt;
- einen Analog/Digital-Konverter, der das analoge Spannungssignal der Spannungskonvertierungseinrichtung in ein digitales Spannungssignal umwandelt;
- eine Steuereinrichtung, welche die Schaltung zur Erzeugung einer Arbeitsspannung betätigt, um eine festgelegte Arbeitsspannung an die Arbeitselektrode anzulegen, wenn der Teststreifen in das Auslesemessgerät eingeführt wird (t0), und für eine definierte Zeitdauer keine Spannung anlegt, wenn die Probe eingeführt ist (t1) und das digitale Spannungssignal des Analog/Digital-Konverters in Abhängigkeit des interessierenden Analyten eine definierte kritische Spannung (t2) annimmt, und dann (t3) wiederum die Schaltung zur Erzeugung einer Arbeitsspannung ansteuert, um die Arbeitsspannung an die Arbeitselektrode anzulegen, und die Konzentration des Analyten misst durch Unterscheidung des digitalen Spannungssignals des Analog/Digital-Konverters nach einer definierten Zeitdauer ab dem Anlegen der Arbeitsspannung (t3).

14. Elektrochemisches Biosensor-System nach Anspruch 7, weiterhin umfassend einen elektrochemischen Biosensor-Einstellstreifen zur Einstellung des elektrochemischen Biosensor-Auslesemessgeräts (80), wobei der Einstellstreifen umfasst:
- ein erstes isolierendes Substrat;
- zwei Elektroden (33,34), die an dem ersten isolierenden Substrat in einer Längsrichtung ausgebildet sind;
- einen Widerstand, der zwischen den zwei Elektroden eingekoppelt ist und einen vorgegebenen Widerstandswert zur Einstellung des Auslesemessgeräts aufweist; und
- eine Erkennungselektrode (35), die in einer vorgegebenen Position an dem ersten isolierenden Substrats ausgebildet ist und anzeigt, dass der Teststreifen zur Einstellung des Auslesemessgeräts dient.

## Revendications

1. Bande d'essai de biocapteur électrochimique pour mesurer électrochimiquement la concentration de la substance analysée en étant utilisée avec un dispositif de lecture de biocapteur électrochimique comprenant :
- un premier substrat isolant ayant une surface supérieure et une surface inférieure ;
- une électrode de travail (33) formée sur la surface supérieure du premier substrat isolant dans un sens longitudinal ;
- une électrode de référence (34) formée sur la surface supérieure du premier substrat isolant dans un sens longitudinal ;
- un réactif (38) pour réagir avec la substance analysée pour générer un courant électrique correspondant à la concentration de la substance analysée, le réactif étant fixé au-dessus et à travers l'électrode de travail et l'électrode de référence et
- une électrode de reconnaissance (35) formée à une position prédéterminée de la surface supérieure du premier substrat isolant, la position de l'électrode de reconnaissance étant indicative de la matière du réactif fixé sur la bande d'essai, l'électrode de reconnaissance indiquant au dispositif de lecture l'utilisation de la bande d'essai lorsque la bande d'essai est insérée dans le dispositif de lecture.

2. Bande d'essai de biocapteur électrochimique selon la revendication 1 comprenant de plus un second substrat isolant arrangé sur la surface supérieure du premier substrat isolant et le premier substrat isolant et le second substrat isolant formant une entrée d'échantillon à la position du premier substrat isolant où le réactif (38) est fixé.

3. Bande d'essai de biocapteur électrochimique selon la revendication 2 dans laquelle l'entrée d'échantillon est formée par un espace capillaire (36).

4. Bande d'essai de biocapteur électrochimique selon la revendication 1 dans laquelle l'électrode de reconnaissance (35) est arrangée en deux dimensions sur la surface supérieure du premier substrat isolant.

5. Dispositif de lecture (80) de bande d'essai de biocapteur électrochimique pour mesurer électrochimiquement la concentration de la substance analysée en étant utilisé avec une bande d'essai de biocapteur électrochimique ayant une électrode de travail (33), une électrode de référence (34) et une électrode de reconnaissance (35) formée sur une position prédéterminée de la bande d'essai sur une surface supérieure d'un substrat isolant comprenant :
- un dispositif de douille qui est relié électriquement aux électrodes (33, 34, 35) de la bande d'essai lorsque la bande d'essai est insérée dans le dispositif de lecture (80) et qui génère un signal d'insertion de bande d'essai, le dispositif de douille comprenant des moyens pour détecter automatiquement la position de l'électrode de reconnaissance (35) sur différentes bandes d'essai, la position de l'électrode de reconnaissance étant indicative de la matière du réactif fixé sur la bande d'essai pour indiquer le type de bande d'essai par la position de l'électrode de reconnaissance (35) et générant un signal de type de bande d'essai en détectant la position de l'électrode de reconnaissance (35) ;
- un dispositif de mesure de courant électrique pour mesurer la valeur du courant électrique qui traverse les électrodes de la bande d'essai, le dispositif de mesure de courant électrique étant relié électriquement au dispositif de douille ;
- un dispositif d'analyse qui analyse la concentration de la substance analysée selon la valeur de courant électrique mesurée et le signal de type de bande d'essai et
- un dispositif indicateur qui indique la concentration analysée de la substance analysée.

6. Dispositif de lecture de biocapteur électrochimique selon la revendication 5 dans lequel le dispositif de douille comprend un dispositif de connexion électrique dont la borne de jonction est formée en carte à circuits imprimés et un dispositif de compression qui relie électriquement les électrodes de la bande d'essai et la borne de jonction (62, 66) sur le dispositif de connexion électrique en comprimant la bande d'essai sur le dispositif de connexion électrique.

7. Système de biocapteur électrochimique comprenant une bande d'essai de biocapteur électrochimique et un dispositif de lecture de biocapteur dans lequel la bande d'essai de biocapteur électrochimique comprend :
- une premier substrat isolant ayant une surface supérieure et une surface inférieure ;
- une électrode de travail (33) formée sur la surface supéieure du premier substrat isolant dans un sens longitudinal ;
- une électrode de référence (34) formée sur la surface supérieure du premier substrat isolant dans un sens longitudinal ;
- un réactif (38) pour réagir avec la substance analysée pour générer un courant électrique correspondant à la concentration de la substance analysée, le réactif étant fixé au-dessus et à travers l'électrode de travail et l'électrode de référence et
- une électrode de reconnaissance (35) formée à une position prédéterminée de la surface supérieure du premier substrat isolant, la position de l'électrode de reconnaissance étant indicative de la matière du réactif fixé sur la bande d'essai et
le dispositif de lecture du biocapteur (80) comprend :
- un dispositif de douille qui est relié électriquement aux électrodes de la bande d'essai lorsque la bande d'essai est insérée dans le dispositif de lecture et qui génère un signal d'insertion de bande d'essai et un signal de type de bande d'essai en détectant la position de l'électrode de reconnaissance ;
- un dispositif de mesure de courant électrique pour mesurer la valeur du courant électrique qui traverse les électrodes de la bande d'essai, le dispositif de mesure de courant électrique étant relié électriquement au dispositif de douille ;
- un dispositif d'analyse qui analyse la concentration de la substance analysée selon la valeur de courant électrique mesurée et le signal de type de bande d'essai et
- un dispositif indicateur qui indique la concentration de la substance analysée.

8. Procédé pour faire fonctionner un dispositif de lecture de biocapteur électrochimique mesurant la concentration de la substance analysée électrochimiquement en relation avec une bande d'essai de biocapteur électrochimique selon l'une des revendications 1 à 4 comprenant les étapes de :
- confirmation si la bande d'essai est insérée dans le dispositif de lecture lorsque le bouton du secteur est enfoncé ;
- distinction de la position de l'électrode de reconnaissance pour déterminer l'utilisation de la bande d'essai selon la matière du réactif (38) et
- d'exécution de la procédure de routine selon l'utilisation de la bande d'essai déterminée par la position de l'électrode de reconnaissance.

9. Procédé selon la revendication 8 dans lequel l'étape de confirmation comprend de plus l'étape de mettre le dispositif de lecture (80) hors circuit lorsque la bande d'essai n'est pas insérée pendant une certaine période de temps.

10. Procédé selon la revendication 8 ou 9 dans lequel l'étape de confirmation comprend de plus les étapes de confirmation du fait que le bouton de mémoire du dispositif de lecture (80) est enfoncé et d'indication après lecture des valeurs mémorisées à l'intérieur du dispositif de lecture lorsque le bouton de mémoire est enfoncé.

11. Procédé selon l'une des revendications 8 à 10 comprenant de plus l'étape de faire fonctionner à nouveau à partir de l'étape de confirmation de la bande d'essai lorsque la bande d'essai glisse hors du dispositif de lecture (80).

12. Procédé selon l'une des revendications 8 à 11 dans lequel l'étape d'exécution de la procédure de routine comprend :
- la confirmation si l'échantillon est inséré ;
- l'analyse de la concentration de la substance analysée à laquelle on s'intéresse en mesurant le courant électrique en appliquant une certaine tension à l'électrode sur la bande d'essai après avoir attendu une certaine période de temps pour que l'échantillon et le réactif (38) réagissent au cas où l'échantillon est inséré et
- la sortie de la valeur de concentration de la substance analysée.

13. Dispositif de lecture selon la revendication 5 ou 6 utilisant la bande d'essai du biocapteur électrochimique selon l'une des revendications 1 à 4 comprenant de plus :
- un circuit générant une tension de travail qui applique une tension de travail à l'électrode de travail (33) ;
- un dispositif de conversion de la tension qui convertit le courant électrique qui traverse l'électrode de travail (33) en un signal de tension analogique ;
- un convertisseur analogique/numérique qui convertit le signal de tension analogique du dispositif de conversion de la tension en un signal de tension numérique ;
- un asservisseur qui fait fonctionner le circuit de génération de la tension de travail pour appliquer une tension de travail fixe à l'électrode de travail lorsque la bande d'essai est insérée dans le dispositif de lecture (t0) et pour ne pas appliquer n'importe quelle tension pendant une période fixée lorsque l'échantillon est inséré (t1) et le signal de tension numérique du convertisseur analogique/numérique tourne vers une tension critique fixée (t2) selon la substance analysée qui intéresse et qui ensuite (t3) fait fonctionner à nouveau le circuit de génération de la tension de travail pour appliquer la tension de travail à l'électrode de travail et qui mesure la concentration de la substance analysée en distinguant le signal de tension numérique du convertisseur analogique/numérique qui applique après une période de temps fixée à partir du point d'application de la tension de travail (t3).

14. Système de biocapteur électrochimique selon la revendication 7 comprenant de plus une bande d'ajustage de biocapteur électrochimique pour ajuster le dispositif de lecture du biocapteur électrochimique (80), la bande d'ajustage comprenant :
- un premier substrat isolant ;
- deux électrodes (33, 34) formées sur le premier substrat isolant dans un sens longitudinal ;
- une résistance reliée entre les deux électrodes ayant une valeur de résistance prédéterminée pour ajuster le dispositif de lecture et
- une électrode de reconnaissance (35) formée à une position prédéterminée sur le premier substrat isolant et indiquant que la bande d'essai est utilisée pour ajuster le dispositif de lecture.
